# EUROPEAN PATENT APPLICATION

(11) **EP 1 838 055 A1**
(43) Date of publication of application: **26.09.2007**
(21) Application number: 06460007.5
(22) Date of filing: 21.03.2006
(51) Int. Cl.: H04L 12/56, H04Q 7/38

(54) **Method for controlling uplink signalling in a radio communications system**

(71) Applicant: SIEMENS AKTIENGESELLSCHAFT, 80333 München (DE)
(72) Inventor: Klein, Axel, 81737 München (DE); Vlering, Ingo, 81539 München (DE); Wimmer, Malgorzata, 50-307 Wroclaw (PL); Wimmer, Markus, 50-316 Wroclaw (PL)

(57) **Abstract**

Method for controlling uplink signalling in a radio communications system, wherein physical layer signalling in downlink from a base station (NB) to a user equipment (UE) is used for controlling a configuration of at least a first uplink signalling channel (HS-DPCCH).

## Description

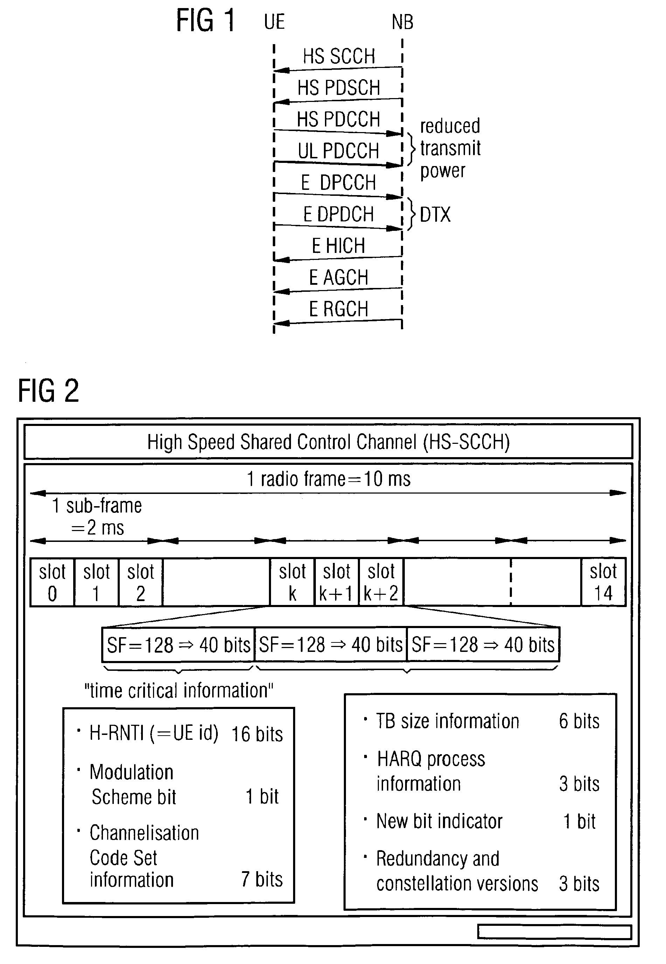

The so called Continuous Connectivity (ConCon) work item of the 3GPP (3^{rd} Generation Partnership Project) standardisation has become one of the main features within Release 7 version of the standard. The so called SIR Target Lowering Concept assumes that after detecting an uplink (UL) traffic inactivity, the base station (NB) will lower the quality requirements for the UL-DPCCH (uplink-dedicated physical control channel) to such a level that only a reduced amount of uplink (UL) resources is needed, but enough quality assured to keep the inner loop power control (PC). In the configuration proposed for the ConCon concept (HS-DSCH (high-speed dedicated shared channel) and E-DCH (enhanced dedicated channel) only), the SRBs (signalling radio bearer) are assumed to be mapped on the HS-DSCH in downlink (DL) and on the E-DCH in uplink. Consequently, a user equipment (UE) transmits in uplink the DPCCH, the HS-DPCCH, the E-DPDCH (enhanced dedicated physical data channel), and the E-DPCCH (enhanced dedicated physical control channel), see figure 1.

In case of detecting a traffic inactivity (both for HSDPA (high-speed downlink packet access) and E-DCH) UL E-DCH channels (E-DPCCH and E-DPDCH) are automatically DTXed (discontinuous transmission), HARQ (Hybrid Automatic Repeat Request) ACK/NACKs carried by HS-DPCCH will also not be transmitted. HS-DPCCH, carrying the CQI (channel quality information) reports, and UL-DPCCH will remain active. In order to reduce the interference created by these two channels, the NB lowers the SIR (signal to interference ratio) target requirement for the UL DPCCH.

The power needed for the transmission of the HS-DPCCH is set relative to the UL-DPCCH transmit power by means of a so called beta factor (β_hs). As a consequence, a lowered SIR target for the UL-DPCCH transmission will influence the power used not only for the UL-DPCCH transmissions but also for transmissions of CQI reports in the HS-DPCCH. Nevertheless, as CQI reports are not required for scheduling until the DL is reactivated, a lowered HS-DPCCH power has no negative influence on the system. Furthermore, the so called CQI off concept may be applied, which additionally reduces interference created by HS-DPCCH (see 3GPP Tdoc R1-051322).

Although not explicitly stated, the SIR target lowering concept was considered to be used even when transmissions on the HS-DPCCH are required, e.g. for ACK/NACK signalling in uplink. In such a scenario, a reliable control information carried over HS-DPCCH is needed due to the active data transmission in DL. Therefore, when lowering the SIR target for the UL-DPCCH, some measures have to be taken to compensate the quality/power lowering for the HS-DPCCH.

In the 3GPP Tdoc R1-060357, a new power offset value, Δ_{ConCon}, was introduced. Based on this value, after reception of a co called change mode command (e.g. carried via HS-SCCH), the UE calculates the new DPCCH/HS-DPCCH gain factor β_{ho,new}. The value Δ_{ConCon} was proposed to be signalled via higher layers together with Δ_{ACK}, Δ_{NACK} and Δ_{CQI} during RB setup/reconfiguration, RRC connection set-up or/and Phy CH reconfiguration.

Nevertheless, the power offset calculated by the RNC (Radio Network Controller) is based on the initial quality settings (e.g. initial SIR target) and is thus done only during a connection set-up. In contrast, the SIR target lowering is performed by the NB based on the actual SIR target value and aligned with the actual channel conditions. As a consequence, the power offset proposed by the RNC may not be able to compensate the real SIR target reduction ordered by the NB, or it would allow only a conservative SIR target reduction or even worse, it could cause network overshooting if the power offset set by the RNC for ConCon is much higher then the real SIR target lowering performed by NB.

It is thus an object of the present invention to mitigate the above problems associated with a RNC controlled power offset. This object is adressed by the features of independent claim 1. Further embodiments of the inventions are defined in dependent claims.

According to one aspect of the invention, a method for controlling a configuration for uplink signalling in a radio communications system is proposed.

Further independent claims relate to a base station, a user equipment and a radio communications system, each comprising at least means for implementing the method according to the invention.

For the SIR target lowering concept, a misuse of the HS-SCCH signalling (3GPP TS 25.321, V6.7.0 (2005-12-22), Ch. 9.2.3.1) is discussed to inform the UE about initiation/termination of the ConCon phase. For this purpose one out of seven un-used/reserved code words from channelisation code set (out of 128) was intended to be used, see figure 2. Instead of representing the channelisation code set to be used by UE, a not yet defined code word would indicate the beginning of the SIR target lowering phase. In this case, the UE would ignore the rest of the HS-SCCH message (TB size information, HARQ process information, new bit indicator, redundancy and constellation versions, all together 13 bits) as no data is expected to be read on the associated HS-PDSCH.

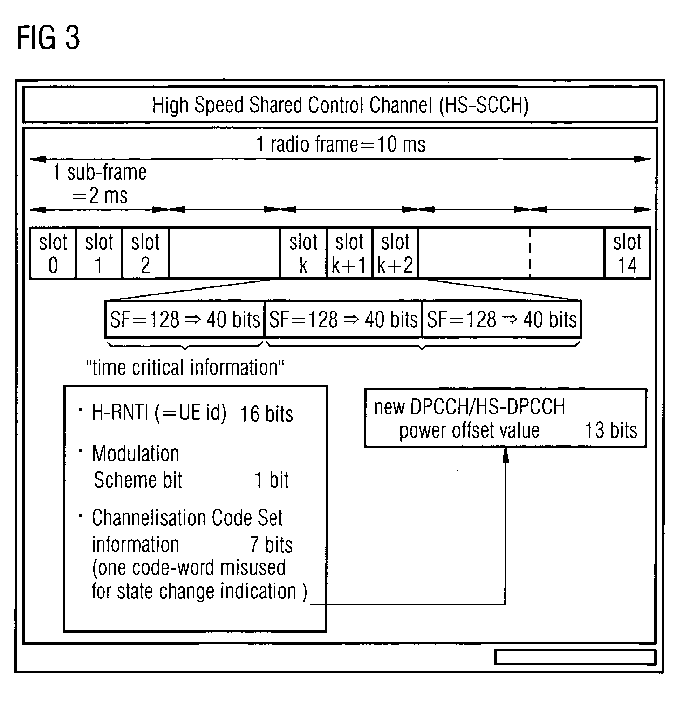

According to one aspect of the invention, the meaning of 13 unused bits is redefined in case the ConCon initialisation code word (i.e. a state change flag) is used, see figure 3. Bits (all or part of) normally ignored by the UE could then carry a more exact information about the DPCCH/HS-DPCCH power offset to be used by the UE during the ConCon and/or other information advantageous for ConCon operation (e.g. configuration parameters for additional robustness features like different PC steps, different PC algorithm, improved reactivation signalling etc.). In addition the NB would have the possibility for flexible and on demand change of the above mentioned measures (i.e. power offset, robustness features, etc.) during ConCon phase, as the HS-SCCH is constantly monitored by the UE (i.e. beta-boosting tracking, ConCon tracking).

As an advantage, the NB would have the possibility to signal exact DPCCH/HS-DPCCH power offset values to the UE, which enables a reliable transmission of the HS-DPCCH during the E-DCH inactive phase and would thus allow the usage of the SIR target lowering concept also when HSDPA transmission is active.

The advantages of the inventive concept are the following:
- More exact: the NB can set a more optimal Δ_{ConCon} compared with the RNC and thus a higher gain by SIR target reduction can be achieved.
- Possibility to update; as radio conditions change, the NB can update Δ_{ConCon} by repeating the HS-SCCH signal "ConCon On" with a different power offset value.
- No overhead: bits used for signalling would normally be ignored, i.e. dummies would be transmitted. Thus, signalling of Δ_{ConCon} would not cause any signalling overhead.
- Assuming realistic Δ_{ConCon} values, e.g. 0dB, 1dB, ..., 7dB, 3 bits of the aforementioned 13 bits would be needed, i.e. 10 bits would still remain unused and may be used for other purposes.

## Claims

**1.** Method for controlling uplink signalling in a radio communications system, wherein
physical layer signalling in downlink from a base station (NB) to a user equipment (UE) is used for controlling a configuration of at least a first uplink signalling channel (HS-DPCCH).

**2.** Method according to claim 1, wherein
the physical layer signalling in downlink is used for controlling an uplink transmission power of a first uplink signalling channel (HS-DPCCH) relative to a second uplink signalling channel (UL-DPCCH).

**3.** Method according to claim 1, wherein
the physical layer signalling in downlink is used for controlling an absolute uplink transmission power of a first uplink signalling channel (HS-DPCCH).

**3.** Method according to claim 2, wherein
the physical layer signalling defines an offset value between the first and the second uplink signalling channel.

**4.** Method according to claim 3, wherein
the power offset value is a negative value.

**5.** Method according to claim 1, wherein
the first uplink signalling channel (HS-DPCCH) is used for signalling confirmation messages in an ARQ-process and/or information relating to downlink channel quality measurements.

**6.** Method according to one of the preceding claims, wherein the physical layer signalling in downlink is effected in an HS-SCCH channel.

**7.** Method according to one of the preceding claims, wherein bits are stolen from a downlink signalling channel (HS-SCCH) and/or unused bits from a downlink signalling channel (HS-SCCH) are used for signalling the transmission power offset in downlink.

**8.** Method according to one of the preceding claims, wherein the first uplink signalling channel is a EIS-DPCCtt and the second uplink signalling channel is an UL-DPCCH channel.

**9.** Method according to one of the preceding claims, wherein the transmission power offset between the first (HS-DPCCH) and the second uplink signalling channel (UL-DPCCH) is controlled individually for the user equipment (UE).

**10.** Method according to one of the preceding claims, wherein the transmission power offset is controlled when the user equipment (UE) is switched into a state with reduced transmission power for the first and second uplink signalling channel (HS-DPCCH, UL-DPCCH) by the base station (NB).

**11.** Method according to claim 10, wherein
the transmission power offset is configured relative to an initial transmission power offset determined during link configuration.

**12.** Method according to claim 11, wherein
the initial transmission power offset is determined by a radio network controller attached with the base station (NB).

**13.** Method according to claim 10, wherein
before switching the user equipment (UE) back to normal state, information is signalled to the user equipment (UE) with regards to the transmission power of the first and second uplink signalling channel (HS-DPCCH, UL-DPCCH).

**14.** Method according to claim 13, wherein
the information is signalled repeatedly for a ramp up of the the user equipment's (UE) transmission power before switching back to normal state.

**15.** Method according to claim 13, wherein
bits are stolen from a downlink signalling channel (HS-SCCH) and/or unused bits from a downlink signalling channel (HS-SCCH) are used for signalling the transmission power information.

**16.** Method according to claim 1, wherein
when the user equipment (UE) is switched into the state of reduced transmission power, a different slot format for the second uplink signalling channel (UL-DPCCH) is selected.

**17.** Method according to claim 16, wherein
bits are stolen from a downlink signalling channel (HS-SCCH) and/or unused bits from a downlink signalling channel (HS-SCCH) are used for signalling information regarding the selected slot format.

**18.** Method according to claim 1, wherein
the physical layer signalling in downlink is used for changing power control parameters in the user equipment (UE).

**19.** Method according to claim 18, wherein
the power control parameters consist of a power control step size and/or a DPC mode.

**20.** Method according to claim 18, wherein
bits are stolen from a downlink signalling channel (HS-SCCH) and/or unused bits from a downlink signalling channel (HS-SCCH) are used for signalling information regarding the selected slot format.

**21.** Method according to claim 1, wherein
the physical layer signalling in downlink is used for signalling an information sequence regarding the transmission power of the user equipment (UE) when switched back to normal state.

**22.** Method according to claim 21, wherein
bits are stolen from a downlink signalling channel (HS-SCCH) and/or unused bits from a downlink signalling channel (HS-SCCH) are used for signalling information regarding the selected slot format.

**23.** Method according to one of the preceding claims, wherein bits of the downlink signalling channel (HS-SCCH) not used for signalling are not transmitted by the base station (NB).

**24.** Base station (NB) or a radio communications system, comprising means for performing physical layer signalling in downlink to a user equipment (UE) for controlling a configuration of at least a first uplink signalling channel (HS-DPCCH) .

**25.** Base station (NB) according to claim 24, wherein
the means for signalling in downlink are configured to use bits stolen from a downlink signalling channel (HS-SCCH) and/or unused bits from a downlink signalling channel (HS-SCCH) .

**26.** User equipment (UE),
comprising means for receiving physical layer signalling in downlink from a base station (NB) for controlling a configuration of at least a first uplink signalling channel (HS-DPCCH).

**27.** Radio communications system, consisting of at least one base station (NB) and one user equipment (UE), each comprising means for implementing the method according to claim 1.
